# EUROPÄISCHE PATENTSCHRIFT

(11) **EP 0 567 730 B1**
(45) Veröffentlichungstag und Bekanntmachung des Hinweises auf die Patenterteilung: **10.01.1996**
(21) Anmeldenummer: 93101686.9
(22) Anmeldetag: 04.02.1993
(51) Int. Cl.: A21C 5/00

(54) **Messkammerträger für Teigteilmaschinen**
Measuring chamber support for dough divider
Support de chambre de dosage pour diviseur de pâte

(30) Priorität: 28.04.1992 DE 4213766
(43) Veröffentlichungstag der Anmeldung: 03.11.1993
(73) Patentinhaber: Werner & Pfleiderer GmbH, D-70469 Stuttgart (DE)
(72) Erfinder: Judex, Helmut, W-7141 Schwieberdingen (DE)

(56) Entgegenhaltungen:
- NL-A- 113 147

## Beschreibung

Die Erfindung betrifft einen Messkammerträger für Teigteilmaschinen zum Teilen von Teig für grosse und kleine Teilgewichte mit rechteckigen oder quadratischen Messkammern mit darin angeordneten Messkolben, deren Hub über den Antrieb der Teigteilmaschine und oder Anschlägen veränderbar ist.

Teigteilmaschinen dieser Art sind allgemein bekannt und haben die Aufgabe aus einer grösseren in einem Trichter befindlichen Teigmasse definierte und hinsichtlich ihres Gewichtes gleichbleibende Teigteile zur Weiterverarbeitung für Brot oder Brötchen abzutrennen. Dabei werden die im Messkammerträger angeordneten Messkammern an einer unterhalb des Teigtrichters angeordneten Füllkammer teigabscherend vorbeibewegt. Hierbei kann der Messkammerträger als auf- und abbewegbarer Flachschieber gemäss DE 34 05 977 C1 oder als vor der Öffnung der Füllkammer angeordneter zylindrischer Drehschieber analog der DE 35 30 724 C1 ausgebildet sein.
In beiden Fällen ist der Hub der Messkolben veränderbar einstellbar und somit können innerhalb eines bestimmten Gewichtsbereiches mit der gleichen Messkammergrösse unterschiedlich Teilgewichte realisiert werden. Sollen andere Teilgewichte, die nicht mehr im Hubverstellungsbereich der Messkolben liegen, abgeteilt werden, so muss der ganze Messkammerträger gegen einen anderen mit entsprechend grösseren oder kleineren Messkammern ausgetauscht werden. Das Auswechseln des ganzen Messkammerträgers ist relativ aufwendig und setzt voraus, dass eine entsprechende Lagerhaltung von unterschiedlichen Messkammerträgern erforderlich ist.

Aus der FR-PS 15 02 504 ist es bekannt, um den Gewichtsbereich der abzuteilenden Teigstücke zu erweitern, die Messkolben einer Teigteilmaschine als Doppelkolben auszubilden. Hierbei kann der äussere grosse Messkolben mit einer in die Messkammer einbaubaren Vorrichtung arretiert werden und der innere kleinere Messkolben zur Teigabteilung benutzt werden. Hiermit lässt sich zwar der Teilbereich erheblich erweitern, aber neben der zusätzlich benötigten Arretierungsvorrichtung für die grossen Messkolben, bleibt die Reihenzahl und der Reihenabstand beim Betreiben der kleineren inneren Messkolben konstant, so dass hierbei nur eine geringe Leistungsausbeute gegeben ist.

Der Erfindung liegt die Aufgabe zugrunde eine Teigteilmaschine mit einem Messkammerträger zu versehen, der eine schnelle und kostengünstige Anderung der Form und Teilgewichte des abzuteilenden Teiges ermöglicht.

Diese Aufgabe wird erfindungsgemäss durch die im Kennzeichnungsteil des Patentanspruches 1 angegebenen Merkmalen gelöst.

Durch das erfindungsgemässe austauschbare Segment lässt sich auf einfache Weise die Formgrösse und die Reihenzahl der Messkammern verändern, ohne dass der ganze Messkammerträger aus seiner Führung und Lagerung an der Teigteilmaschine ausgebaut und die Antriebsverbindungen gelöst und befestigt werden müssen. Ein weiterer Vorteil ergibt sich hierbei, dass das ausgebaute und mit Teigresten behaftete Segment mit den dazugehörigen Messkolben aufgrund seiner Austauschbarkeit einfacher zu reinigen ist und bis zu seinem Wiedereinsatz im Messkammerträger in einer Reinigungsflüssigkeit (Wasser) abgelegt werden kann. Somit stehen bei einer erforderlichen Veränderung jederzeit saubere Messkammern und Messkolben zum Austausch bereit.
Durch die Merkmale des Anspruches 2 ergibt sich eine vorteilhafte konstruktive Gestaltung für einen als Flachschieber ausgebildeten Messkammerträger.
Eine vorteilhafte Ausbildung der Erfindung für einen als Drehschieber ausgebildeten Messkammerträger bei einer Teigteilmaschine, sind mit den Merkmalen des Anspruches 3 aufgezeigt.

Die Erfindung wird nachstehend anhand einer Zeichnung und zwei Ausführungsbeispielen beschrieben. Es zeigt
- Fig. 1: eine im Längsschnitt schematisch dargestellte Teigteilmaschine mit einem als Flachschieber ausgebildeten Messkammerträger ohne Gestell und zentralen Antriebsmotor
- Fig. 2: einen Messkammerträger gemäss Fig. 1 in vergrösserter Darstellung
- Fig. 3: ein austauschbares Segment mit 2 Messkammern ohne Messkolben
- Fig. 4: ein austauschbares Segment mit 3 Messkammern ohne Messkolben.
- Fig. 5: einen als Drehschieber ausgebildeten Messkammerträger mit Aussparung ohne Segment
- Fig. 6: ein Segment 7' mit 4 Stegen 8', welches nach dem Einsetzen in die Aussparung 31 des Drehschiebers 3' 5 Messkammern 4 ergibt.
- Fig. 7: ein Segment 7' mit 3 Stegen 8', welches nach dem Einsetzen in die Aussparung 31' 2 Messkammern 4 bildet.

Die Teigteilmaschine besteht im wesentlichen aus einer Füllkammer 2, die unterhalb eines mit Teig 11 gefüllten Teigtrichters 1 angeordnet ist. In der Füllkammer 2 ist ein axial vor-und zurückbewegbarer Förderkolben 21 angeordnet. Bei der Vorwärtsbewegung des Förderkolbens 21 wird der vorher in die Füllkammer 2 aus dem Teigtrichter 1 angesaugte Teig 11 in die Messkammern 4 eines als Flachschieber auf- und abbewegbaren Messkammerträgers 3 reingepresst und schiebt dabei die in den Messkammern 4 befindlichen Messkolben 41 entsprechend ihrer eingestellten Hubbegrenzung (in der Zeichnung nicht dargestellt) zurück.
Sind die Messkammern 4 mit Teig 11 gefüllt erfolgt eine Abwärtsbewegung des Messkammerträgers 3, wobei gleichzeitig der Teig 11 entlang des Auslasses der Füllkammer 2 abgeschert wird. In der unteren (nicht dargestellten) Stellung wird durch eine Vorwärtsbewegung der Messkolben 41 die so abgeteilten Teigstücke aus den Messkammern 4 ausgestossen und einer nicht gezeigten Weiterbearbeitungseinrichtung zugeführt. Die zur Bewegung des Förderkolbens 21, des Messkammerträgers 3, der Messkolben 41 vorgesehene Antriebs- und Steuermittel sind nicht gezeigt, sondern nur durch Pfeile angedeutet.

Der nicht gezeigte Antrieb für die Auf- und Abbewegung des Messkammerträgers 3 ist mit der Öse 32 verbunden.

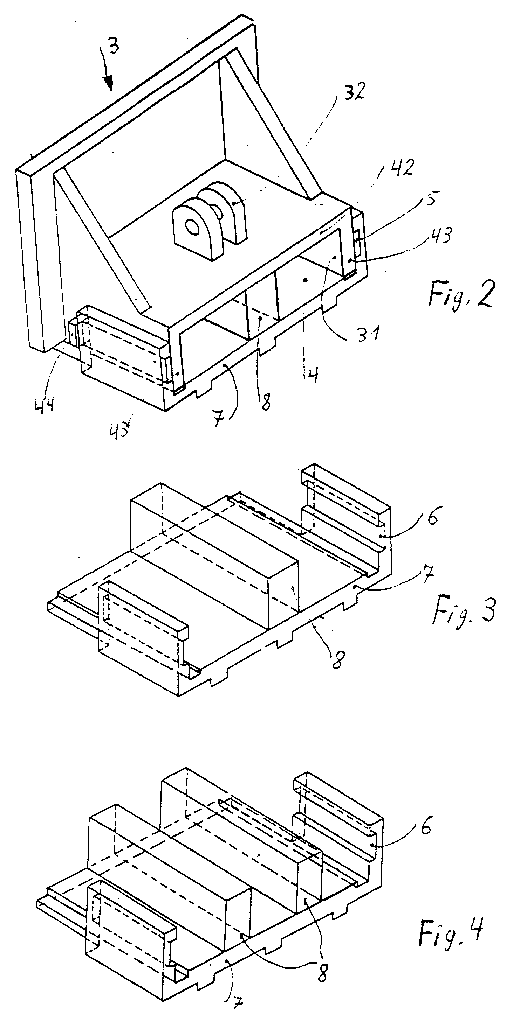

In Fig. 2 ist ein erfindungsgemässer Messkammerträger 3 als Flachschieber gezeigt. Hierbei ist der untere Bereich des Flachschiebers 3 als ein nach unten offener u-förmiger Abschnitt gestaltet, wobei der Zwischenraum zwischen den beiden Schenkeln 43 die Aussparung 31 bildet, in welche ein Segment 7 einsetzbar ist.

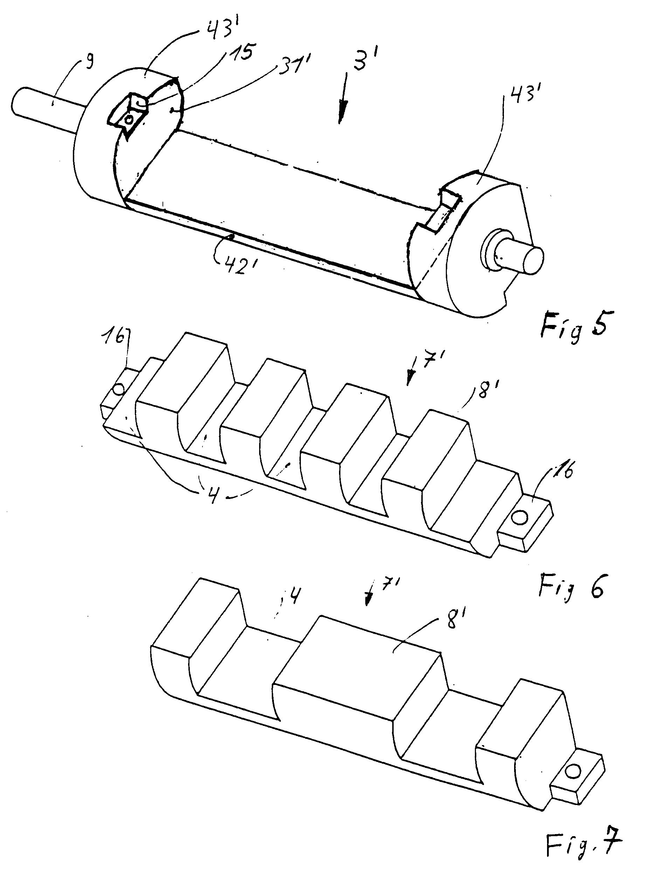

Aussen an den Schenkeln 43 sind Führungsschienen 5 zur Aufnahme des mit Führungsnuten 6 versehenen Segmentes 7 angeordnet. Auf dem Boden des Segmentes 7 kann ein Steg 8 (Fig. 3) oder mehrere Stege 8 (Fig. 4) angeordnet sein. Diese Stege 8, die im gefügten Zustand (Fig. 2) formschlüssig an der Innenseite des Steges 42 des u-förmigen Abschnittes des Messkammerträgers 3 anliegen bestimmen die Form, Anzahl und Grösse der so gebildeten Messkammern 4.
Aus den Fig. 2 bis 4 ist für den Fachmann ersichtlich wie einfach und schnell eine Umstellung auf eine andere Messkammergrösse und/oder Anzahl und Form realisiebar ist.
Das Auswechseln eines Segmentes 7 ist dabei ohne Werkzeug möglich, wobei die richtige Stellung des Segmentes 7 nach dem Aufschieben durch den Anschlag 44 vorgegeben ist. Die Sicherung des Segmentes 7 in der Aussparung 31 des Messkammerträgers 3 erfolgt dabei über einen Schnappverschluss oder Feststellschraube (in der Zeichnung nicht näher dargestellt).

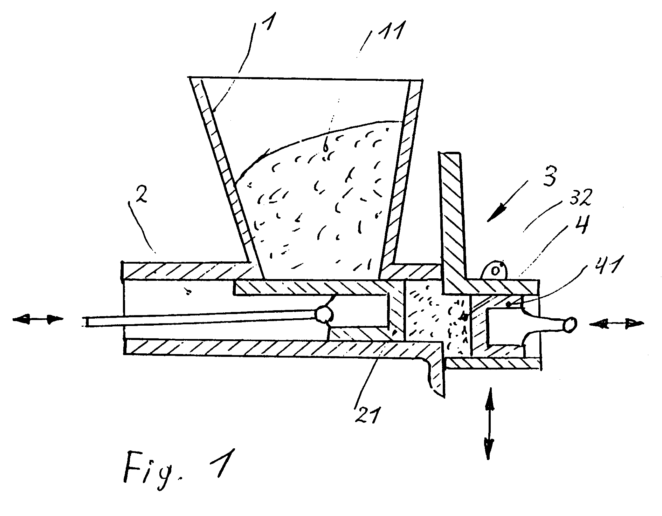

In den Fig. 5 bis 7 ist ein erfindungsgemässer Messkammerträger 3 als Drehschieber 3' gezeigt. Dieser Drehschieber 3' kann anstelle des in Fig. 1 gezeigten Flachschiebers 3 der Füllkammer 2 der Teigteilmaschine zugeordnet werden. Dabei ist der Drehschieber 3' durch die Wellenenden 9 wenigstens um 90° schwenkbar am Gestell der Teigteilmaschine gelagert und zumeist mit fliegenden Messkolben versehen.

Der Drehschieber 3' besteht aus einem Walzenkörper, der so mit einer Aussparung 31' versehen ist, dass nur an den Enden durch den verbleibenden Steg 42' verbundene zylindrische Endstücke 43' verbleiben. In diesen Endstücken 43' sind Ausnehmungen 15 vorgesehen, in welche beim Einsetzen eines Segmentes 7' die an den Enden des Segmentes 7' angeordneten Ansätze 16 eingreifen.

In Fig. 6 ist ein Segment 7' mit 4 Stegen 8' gezeigt, welches nach dem Einsetzen in die Aussparung 31' des Walzenkörpers 3' 5 Messkammern 4 bildet.

In Fig. 7 ist ein Segment 7' gezeigt, welches nach dem Einsetzen in die Aussparung des Walzenkörpers 3' nur 2 Messkammern ergibt.

Die in den Fig. 6 und 7 nach einer Drehung um 180° in den Walzenkörper 3' einsetzbaren Segmente 7' verdeutlichen anschaulich welche grosse Gestaltungsmöglichkeiten der Messkammern 4 durch die erfindungsgemässe Lösung in der Praxis für den Bäcker gegeben sind. Auch bei den in Fig. 5 bis 7 gezeigten Drehschieber 3' ist das Auswechseln der Segmente 7' ohne Werkzeug schnell und sicher möglich. Die Arretierung der Segmente 7'kann mittels Schrauben über die in den Ansätzen 16 vorgesehenen Bohrungen erfolgen.

## Patentansprüche

1. Messkammerträger (3,3') für Teigteilmaschinen zum Teilen von Teig (11) in gleichmässige Teigstücke mit mehreren rechteckigen oder quadratischen Messkolben (41) enthaltenden Messkammern (4), wobei der Messkammerträger (3,3') so mit dem Antrieb der Teigteilmaschine verbunden ist, dass dieser an einer unterhalb eines Teigtrichters (1) angeordneten Füllkammer (2) teigabscherend vorbeibewegbar ist, dadurch gekennzeichnet, dass der Messkammerträger (3,3') mit einer Aussparung (31,31') versehen ist, und mit einem leicht auswechselbaren, wenigstens einen Steg (8) enthaltenden Segment (7,7') so formschlüssig verbunden ist, daß der Steg bzw. die Stege (8) an der Innenseite des Steges (42) des Messkammerträgers (3,3') anliegt bzw. anliegen und dadurch die Messkammern (4) bildet.

2. Messkammerträger nach Anspruch 1 bestehend aus einem an der Öffnung der Füllkammer auf- und abbewegbaren Flachschieber, dadurch gekennzeichnet, dass der untere Bereich des Flachschiebers (3) aus einem nach unten offenen die Aussparung (31) bildenden u-förmigen Abschnitt besteht, wobei aussen an den Schenkeln (43) Führungsschienen (5) zur Aufnahme des mit Führungsnuten (6) versehenen Segmentes (7), welches wenigstens einen Steg (8) besitzt, angeordnet sind.

3. Messkammerträger nach Anspruch 1 bestehend aus einem an der Öffnung der Füllkammer wenigstens um 90° verschwenkbaren aus einem zylindrischen Walzenkörper bestehenden Drehschieber, dadurch gekennzeichnet, dass in den beiden durch die Aussparung (31') verbleibenden zylindrischen Endstücken (43') des Walzenkörpers (3') Ausnehmungen (15) nach Massgabe der an beiden Enden des Segmentes (7') angeordneten Ansätzen (16) enthalten sind.

## Claims

1. Measuring chamber carrier (3, 3'), for dough-dividing machines for the dividing of dough (11) into uniform dough pieces, with several rectangular or square measuring chambers (4) containing measuring pistons (41), wherein the measuring chamber carrier (3, 3') is so connected with the drive of the dough-dividing machine that it is movable past a filling chamber (2), which is arranged below a dough funnel (1), shearing dough off, characterised thereby, that the measuring chamber carrier (3, 3') is provided with a recess (31, 31') and so shape-lockingly connected with an easily exchangeable segment (7, 7') containing at least one web (8) that the or each web (8) lies against the inward side of the web (42) of the measuring chamber carrier (3, 3') and thereby forms the measuring chambers (4).

2. Measuring chamber carrier according to claim 1 and consisting of a flat slide which is movable up and down at the opening of the filling chamber, characterised thereby, that the lower region of the flat slide (3) consists of a downwardly open u-shaped portion forming the recess (31), wherein guide rails (5) for the reception of the segment (7), which is provided with guide grooves (6) and has at least one web (8), are arranged externally at the limbs (43).

3. Measuring chamber carrier according to claim 1 and consisting of a rotary slide which consists of a cylindrical roll body and is pivotable through at least 90° at the opening of the filling chamber, characterised thereby, that recesses (15) in accordance with the projections (16) arranged at both ends of the segment (7') are contained in both the cylindrical end members (43'), which are left by the recess (31'), of the roll body (3').

## Revendications

1. Support (3, 3') de chambres de dosage pour machines à diviser la pâte pour diviser la pâte (11) en pâtons réguliers, avec plusieurs chambres de dosage (4), rectangulaires ou carrées, contenant des pistons de dosage (41), le support (3, 3') des chambres de dosage étant relié avec le mécanisme d'entraînement de la machine à diviser la pâte de façon à passer, en tranchant la pâte, devant une chambre de chargement (2) disposée en-dessous d'une trémie à pâte (1), caractérisé par le fait que le support (3, 3') de chambres de dosage présente un évidement (31, 31') et qu'il est relié, par serrage en butée, avec un segment (7, 7') facilement échangeable et contenant au moins une traverse (8), de façon telle que la traverse (8), ou les traverses, s'appuie, ou s'appuient, contre le côté intérieur de la traverse (42) du support (3, 3') de la chambre de dosage et forme, ou forment,de ce fait les chambres de dosage (4).

2. Support de chambres de dosage selon la revendication 1, constitué d'un tiroir plat qui petit prendre un mouvement de monteet-baisse à l'ouverture de la chambre de chargement, caractérisé par le fait que la zone inférieure du tiroir plat (3) est constituée d'une découpe en forme de U ouvert vers le bas, formant l'évidement (31), des rails de guidage (5) étant disposés à l'extérieur, contre les ailes (43), pour recevoir le segment (7) qui présente des rainures de guidage (6) et possède au moins une traverse (8).

3. Support de chambres de dosage selon la revendication 1, constitué d'un tiroir tournant constitué d'un corps cylindrique et pouvant pivoter d'au moins 90° à l'ouverture de la chambre de chargement, caractérisé par le fait que dans les deux éléments cylindriques d'extrémité (43') du corps cylindrique (3') que laisse subsister l'évidement (31'), sont contenus des évidements (15) à la dimension des embouts (16) disposés aux deux extrémités du segment (7').
